# EUROPEAN PATENT APPLICATION

(11) **EP 2 219 249 A1**
(43) Date of publication of application: **18.08.2010**
(21) Application number: 10004070.8
(22) Date of filing: 31.08.2001
(51) Int. Cl.: H01M 4/00

(54) **Electrode for rechargeable lithium battery**

(30) Priority: 01.09.2000 JP 2000265900; 01.09.2000 JP 2000265901; 28.12.2000 JP 2000401501; 24.08.2001 JP 2001254261
(62) Divisional of application: 01961241.5
(71) Applicant: Sanyo Electric Co., Ltd., Moriguchi-shi Osaka 570-8686 (JP)
(72) Inventor: Fukui, Atsushi, Nara 631-0811 (JP); Hashimoto, Takuya, Osaka 573-0026 (JP); Kusumoto, Yasuyuki, Hyogo 651-2217 (JP); Nakamura, Hiroshi, Osaka 572-0084 (JP); Fujimoto, Masahisa, Osaka 535-0002 (JP); Fujitani, Shin, Osaka 573-1102 (JP)
(74) Representative: TER MEER - STEINMEISTER & PARTNER GbR

(57) **Abstract**

The present invention relates to an electrode for a rechargeable lithium battery, **characterized in that** a layer of active material particles composed of a material which alloys with lithium is provided on a current collector, said active material particles in the layer are sinter bonded to each other, a component which does not alloy with lithium is diffused into the active material particles, and said layer of active material particles includes a binder which remains after a heat treatment for the sintering.

## Description

### TECHNICAL FIELD

The present invention relates to a negative electrode for a rechargeable lithium battery, a method for fabrication thereof and a rechargeable lithium battery.

### BACKGROUND ART

The use of metallic lithium for a negative electrode enables construction of batteries which exhibit high charge-discharge capacities. However, the metallic lithium deposited on the negative electrode during charge grows into dendrites, which could cause problematic internal short-circuiting.

The use of lithium-alloying metals, such as Si, Sn and Al, as the negative active material may be expected to solve the above-described problem and achieve high charge-discharge capacities. Despite the expectation of higher capacities, the use of such alloying metals as the active material has resulted problematically in the separation or delamination of the active material from a current collector because such active materials undergo a large change in volume during repetitive charge-discharge cycling and are consequently pulverized.

Japanese Patent Laying-Open No. Hei 11-339777 proposes a technique for reducing a contact resistance between a current collector and active material by coating on the current collector a slurry containing silicon powder as the active material and then calcining the coating under a non-oxidizing atmosphere.

Japanese Patent Publication No. Hei 11-2948205 proposes using, as a negative electrode for a rechargeable lithium battery, a product prepared by coating silicon or a complex of silicon and carbon on a conductive substrate and then sintering the coating under a non-oxidizing atmosphere.

Japanese Patent Laying-Open No. Hei 2000-12089 proposes the use of a product prepared by sintering copper silicide, or a complex of silicon with conductive carbon or with a conductive metal, together with a conductive metal foil. Also, Japanese Patent Laying-Open No. Hei 2000-12088 proposes the use of a product prepared by bonding active material onto a current collector having an average roughness of 0.03 µm or larger by a binder.

However, the above-described conventional methods have resulted in the failure to obtain sufficiently good charge-discharge cycle performance characteristics and thus provide practical negative electrodes for rechargeable lithium batteries, which has been a problem.

### DISCLOSURE OF THE INVENTION

It is an object of the present invention to provide an electrode for a rechargeable lithium battery, which can provide a high charge-discharge capacity and exhibit excellent cycle performance characteristics, a method for fabrication thereof and a rechargeable lithium battery using the same.

A negative electrode for a rechargeable lithium battery, in accordance with a first aspect of the present invention, is characterized as obtainable by providing a conductive metal foil having a surface roughness Ra of 0.2 µm or larger as a current collector, and sintering a layer of a mixture of active material particles containing silicon and/or a silicon alloy with conductive metal powder on a surface of the current collector under a non-oxidizing atmosphere.

A negative electrode for a rechargeable lithium battery, in accordance with a second aspect of the present invention, is characterized as obtainable by providing a conductive metal foil having a surface roughness Ra of 0.2 µm or larger as a current collector and sintering a layer of active material particles containing silicon and/or a silicon alloy on a surface of the current collector under a non-oxidizing atmosphere.

A method for fabrication of a negative electrode for a rechargeable lithium battery, in accordance with a third aspect of the present invention, is characterized as including the steps of providing a layer of a mixture of active material particles containing silicon and/or a silicon alloy with conductive metal powder on a surface of a conductive metal foil having a surface roughness Ra of 0.2 µm or larger, and sintering, under a non-oxidizing atmosphere, the mixture layer while placed on the surface of the conductive metal foil.

A method for fabrication of a negative electrode for a rechargeable lithium battery, in accordance with a fourth aspect of the present invention, is characterized as including the steps of providing a layer of active material particles containing silicon and/or a silicon alloy on a surface of a conductive metal foil having a surface roughness Ra of 0.2 µm or larger, and sintering, under a non-oxidizing atmosphere, the layer of active material particles while placed on the surface of the conductive metal foil.

An electrode for a rechargeable lithium battery, in accordance with a fifth aspect of the present invention, is **characterized in that** a layer of active material particles composed of lithium-alloying material is provided on a current collector, the active material particles in the layer are sinter bonded to each other and a nonlithium-alloying component is diffused in the active material particles.

A negative electrode for a rechargeable lithium battery, in accordance with a sixth aspect of the present invention, is characterized as obtainable by providing a conductive metal foil as a current collector, and sintering a mixture of active material containing silicon and/or a silicon alloy with conductive metal powder on a surface of the current collector under a reducing atmosphere.

A method for fabrication of a negative electrode for a rechargeable lithium battery, in accordance with a seventh aspect of the present invention, is characterized as including the steps of providing a mixture of active material containing silicon and/or a silicon alloy with conductive metal powder on a surface of a conductive metal foil, and sintering, under a reducing atmosphere, the mixture while placed on the surface of the conductive metal foil.

A rechargeable lithium battery of the present invention is characterized as including a negative electrode either comprised of the negative electrode in accordance with the first, second or sixth aspect, or prepared by the method in accordance with the third, fourth or seventh aspect, or comprised of the electrode in accordance with the fifth aspect; a positive electrode containing positive active material; and a nonaqueous electrolyte.

The matters common to the first through seventh aspects of the present invention may be hereinafter referred to as those of the "present invention".

In the present invention, a conductive metal foil having a surface roughness Ra of 0.2 µm or larger is preferably used as a current collector. The value of surface roughness Ra is a value determined before the metal foil is sintered. The use of such a conductive metal foil having the specified surface roughness Ra increases a contact area between the mixture of active material particles with conductive metal powder and the surface of the metal foil, and accordingly allows more effective sintering under a non-oxidizing or reducing atmosphere to result in the improved adhesion of the active material particles and conductive metal powder to the current collector. This suppresses large volumetric expansion or shrinkage of the active material that occurs as it stores and releases lithium during a charge-discharge reaction and also prevents separation of the active material from the current collector due to pulverization. Even when the conductive metal powder was excluded and thus only the active material particles were used, the use of such a conductive metal foil as a current collector increases a contact area between the current collector and the active material particles to result in the improved adhesion of the active material particles to the current collector.

The upper limit of surface roughness Ra of the conductive metal foil is not particularly specified, but may preferably fall within the range of 10 - 100 µm, as will be described below. Accordingly, the substantial upper limit of surface roughness Ra may be 10 µm or below.

The surface roughness Ra and an average distance S between adjacent local peaks preferably satisfy the relationship 100Ra ≧ S. The surface roughness Ra and the average distance S between local peaks are defined in Japanese Industrial Standards (JIS B 0601-1994) and can be measured as by a surface roughness meter.

In the present invention, sintering of the conductive metal powder and active material particles while in a mixed condition results in the formation of a solid conductive network by the conductive metal powder that surrounds the active material particles. This insures current collection capability even if pulverization occurs and thus suppresses an increase of contact resistance.

The conductive metal foil for use as a current collector in the present invention may be composed of a metal such as copper, nickel, iron, titanium or cobalt, or an alloy containing any combination thereof. It is particularly preferred that the conductive metal foil contains a metal element that shows a tendency to diffuse into the active material particles. From this point of view, the conductive metal foil preferably comprises a copper foil or a copper alloy foil. The copper element when heat treated shows a high tendency to diffuse into the active material particles. It is accordingly expected that such a conductive foil when sintered shows the improved adhesion to the active material particles. The copper foil having a surface roughness Ra of 0.2 µm or larger may be exemplified by an electrolytic copper foil or an electrolytic copper alloy foil. Such an electrolytic copper or copper alloy foil can be made by electrolytically depositing copper or a copper alloy on a copper foil surface. Other metal foils can also be used which carry copper or a copper alloy electrolytically deposited thereon. Such metal foils may be made by electrically depositing copper or a copper alloy on a surface of a nickel foil, for example.

In the present invention, the conductive metal powder for use in combination with the active material particles may be composed of the same material as the conductive metal foil. Specific examples of such materials include copper, nickel, iron, titanium, cobalt and their alloys and mixtures. The particularly preferred conductive metal powder is composed of copper. By sintering a mixture of the active material particles and the conductive metal powder on a surface of the current collector, a metal component present in the conductive metal foil and/or the conductive metal powder is believed to diffuse into the active material particles and localize around the active material particles. The use of copper or other nonlithium-alloying metal component suppresses volumetric expansion and shrinkage during a charge-discharge reaction in regions where the metal component is unevenly distributed. This prevents separation of the active material from the current collector and pulverization of the current collector material, resulting in the improved charge-discharge cycle characteristics.

The active material particles for use in the present invention may be composed of silicon and/or a silicon alloy. Examples of silicon alloys include solid solutions of silicon and other one or more elements, intermetallic compounds of silicon with other one or more elements and eutectic alloys of silicon and other one or more elements. Alloying can be achieved by such methods as arc melting, liquid quenching, mechanical alloying, sputtering, chemical vapor deposition and calcining. Examples of liquid quenching methods include a single roll quenching method, a twin roll quenching method and various atomizing methods including gas atomizing, water atomizing and disk atomizing.

The active material particles for use in the present invention may also comprise silicon and/or silicon alloy particles with surfaces being coated with a metal or the other. Coating can be achieved by such methods as electroless plating, electrolytic plating, chemical reduction, vapor deposition, sputtering and chemical vapor deposition. Preferably, the coating metal is the same type of metal as the conductive metal foil or the conductive metal powder. In the sintering, the active material particles if coated with the metal identical in type to the conductive metal foil or conductive metal powder exhibit the marked improvement in adhesion to the current collector and the conductive metal powder, resulting in the provision of further improved charge-discharge cycle characteristics.

The active material particles for use in the present invention may be composed of material that alloys with lithium. Examples of such lithium-alloying materials include the aforesaid silicon and silicon alloys, germanium, tin, lead, zinc, magnesium, sodium, aluminum, gallium, indium and their alloys.

The mean particle diameter of the active material particles for use in the present invention is not particularly specified but may preferably be up to 100 µm, more preferably up to 50 µm, most preferably up to 10 µm, to insure effective sintering. The better cycle performance characteristics can be obtained as the mean particle diameter of the active material particles becomes smaller. The mean particle diameter of the conductive metal powder for use in the present invention is not particularly specified but may preferably be up to 100 µm, more preferably up to 50 µm, most preferably up to 10 µm.

In the present invention, a ratio by weight of the conductive metal powder to the active material particles is preferably within the range of 0.05 - 50. If the ratio is too low, satisfactory charge-discharge cycle characteristics may not be obtained. On the other hand, if it becomes excessively high, the amount of the active material particles in the blend becomes relatively smaller to result in the reduced charge-discharge capacity.

However, if the mean particle diameter of the active material particles is small, satisfactory charge-discharge cycle characteristics may be obtained even when the conductive metal powder is excluded, i.e., with the sole use of the active material particles.

In the present invention, the thickness of the conductive metal foil is not particularly specified but may preferably be in the range of 10 µm - 100 µm. The thickness of the sintered layer overlying the conductive metal foil and consisting of the active material particles or a mixture of the active material particles and conductive metal powder is not particularly specified but may preferably be up to 100 µm, more preferably 10 µm - 100 µm.

In the present invention, sintering may be carried out under a non-oxidizing atmosphere such as a nitrogen, argon or other inert gas atmosphere. Alternatively, sintering may be carried out under a hydrogen or other reducing atmosphere. Preferably, sintering is accomplished by a heat treatment at a temperature that does not exceed any one of the melting points of the conductive metal foil, conductive metal powder and active material particles. In an exemplary case where the conductive metal foil and conductive metal powder are both composed of copper, the heat treatment temperature is preferably maintained not to exceed its melting temperature, i.e., 1083 °C, more preferably at 200 - 500 °C, further preferably 300 - 450 °C. Sintering can be achieved by a spark plasma sintering or hot pressing technique.

In the case where a powder containing silicon and/or a silicon alloy is used as the active material particles and a copper element is diffused into such active material particles, if sintering is performed at a high heat treatment temperature, a large amount of copper element may diffuse into the active material particles to form therein an intermetallic compound of silicon and copper, i.e., copper silicide. The formation of copper silicide is likely to decline charge-discharge cycle characteristics. It is therefore preferred that sintering is performed under such conditions that formation of copper silicide is not caused to occur in a detectable level by X-ray diffractometry.

In view of the preceding discussion, it is preferred that sintering is performed within the above-specified temperature range.

In the present invention, a slurry either containing the active material particles, conductive metal powder and a binder or containing the active material particles and a binder may be coated on the conductive metal foil as a current collector to provide thereon a layer of the mixture or a layer of active material particles. The binder preferably remains fully undecomposed after the heat treatment for sintering. As stated above, sintering improves adhesion between the active material particles and the current collector and between the active material particles themselves. If the binder remains undecomposed even after the heat treatment, the binding ability thereof further improves adhesion therebetween. Accordingly, pulverization of the active material particles and separation of the active material particles from the current collector are suppressed to result in obtaining more satisfactory charge-discharge cycle characteristics.

A preferred example of the binder for use in the present invention is polyimide. Polyimide can be obtained, for example, by subjecting polyamic acid to a heat treatment. The heat treatment causes polyamic acid to undergo dehydrocondensation to produce polyimide. In the present invention, polyimide preferably has an imidization level of at least 80 %. If the imidization level of polyimide is below 80 %, its adhesion to the active material particles and the current collector may become unsatisfactory. The imidization level, as used herein, refers to a mole % of the produced polyimide relative to a polyimide precursor. Polyimide with at least 80 % imidization level can be obtained, for example, by subjecting an NMP (N-methylpyrrolidone) solution of polyamic acid to a heat treatment at a temperature of 100 °C - 400 °C for over 1 hour. In an exemplary case where the heat treatment is carried out at 350 °C, the imidization level approaches 80 % in about 1 hour and 100 % in about 3 hours. In the case of using polyimide as a binder, sintering is preferably carried out at a temperature that does not cause full decomposition of polyimide, i.e., at 600 °C or below, since in the present invention the binder is preferred to remain fully undecomposed even after the heat treatment for sintering.

The use of a fluoro-containing binder is also preferred. Polyvinylidene fluoride and polytetrafluoroethylene are particularly preferred fluoro-containing binders. It is preferred that polytetrafluoroethylene or polyvinylidene fluoride is used as a binder and the heat treatment for sintering is performed at a temperature that does not cause full decomposition of such a binder. This further improves charge-discharge cycle performance characteristics.

In view of the above discussion, the heat treatment for sintering is preferably carried out at 200 - 500 °C, more preferably at 300 °C - 450 °C.

In the present invention, a layer of a mixture of the active material particles and the conductive metal powder or a layer of the active material particles is provided on the conductive metal foil as a current collector. Preferably, such a layer, together with the underlying conductive metal foil, is subjected to calendering or rolling, prior to being sintered. Rolling increases a packing density of the layer comprising the mixture or the active material particles and thus improves adhesion between the active material particles and the current collector or between the active material particles themselves, resulting in obtaining improved charge-discharge cycle performance characteristics.

In the present invention, it is also preferred that the active material particles and/or the binder penetrates into minute pits on a surface of the conductive metal foil. This penetration of the active material particles and/or the binder into minute pits on the conductive metal foil surface further improves adhesion between the current collector and the layer of the mixture or the active material particles.

A rechargeable lithium battery of the present invention is characterized as including a negative electrode comprising either the negative electrode of the present invention or the electrode of the present invention or the negative electrode fabricated by the practice of the method of the present invention; a positive electrode containing positive active material and a nonaqueous electrolyte.

An electrolyte solvent for use in the rechargeable lithium battery of the present invention is not particularly specified in type but can be illustrated by a mixed solvent which contains cyclic carbonate such as ethylene carbonate, propylene carbonate or butylene carbonate and also contains chain carbonate such as dimethyl carbonate, methyl ethyl carbonate or diethyl carbonate. Also applicable is a mixed solvent of the above-listed cyclic carbonate and an ether solvent such as 1,2-dimethoxyethane or 1,2-diethoxyethane. Examples of electrolyte solutes include LiPF₆, LiBF₄, LiCF₃SO₃. LiN(CF₃SO₂)₂, LiN(C₂F₅SO₂)₂, LiN(CF₃SO₂)(C₄F₉SO₂), LiC(CF₃SO₂)₃, LiC(C₂F₅SO₂)₃ and mixtures thereof. Other applicable electrolytes include gelled polymer electrolytes comprised of an electrolyte solution impregnated into polymer electrolytes such as polyethylene oxide and polyacrylonitrile; and inorganic solid electrolytes such as LiI and Li₃N, for example. The electrolyte for the rechargeable lithium battery of the present invention can be used without limitation, so long as a lithium compound as its solute that imparts ionic conductivity, together with its solvent that dissolves and retains the lithium compound, remain undecomposed at voltages during charge, discharge and storage of the battery.

Examples of useful active materials for the positive electrode of the rechargeable lithium battery of the present invention include lithium-containing transition metal oxides such as LiCoO₂, LiNiO₂, LiMn₂O₄, LiMnO₂, LiCo_{0.5}Ni_{0.5}O₂ and LiNi_{0.7}Co_{0.2}Mn_{0.1}O₂; and lithium-free metal oxides such as MnO₂. Other substances can also be used, without limitation, if they are capable of electrochemical lithium insertion and deinsertion.

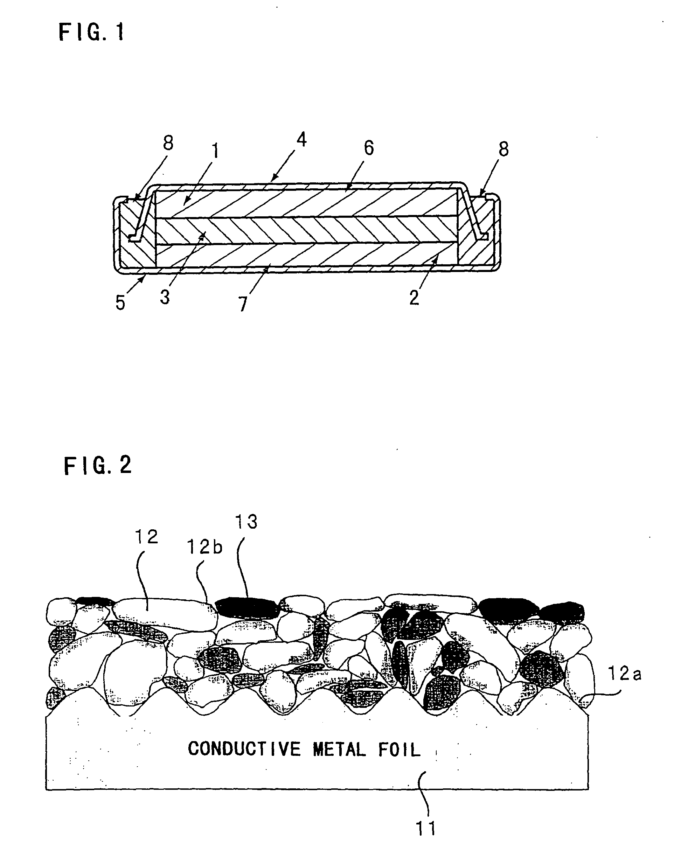

Figure 2 is a schematic sectional view, illustrating one embodiment of the negative electrode for a rechargeable lithium battery in accordance with the present invention. Provided on a conductive metal foil 11 are active material particles 12 and conductive metal powder 13, with all having been already sintered. Formed in the active material particles 12 are a region 12a into which a metal component from the conductive metal foil 11 has diffused and a region 12b into which a metal component from the conductive metal powder 13 has diffused. In the case where the respective metal components diffused from the conductive metal foil 11 and from the conductive metal powder 13 are of the type that does not alloy with lithium, volumetric expansion of the active material particles 12 that occurs as they store lithium becomes smaller in those diffusion regions 12a and 12b. This is believed to suppress separation of the active material particles 12 from the conductive metal foil 11 and the conductive metal powder 13 and also prevent pulverization of the active material particles 12 themselves and accordingly results in the improved charge-discharge cycle performance characteristics.

### BRIEF DESCRIPTION OF THE DRAWINGS

Figure 1 is a schematic sectional view showing a construction of a rechargeable lithium battery made in Examples in accordance with the present invention;
Figure 2 is a schematic sectional view showing one embodiment of a negative electrode for a rechargeable lithium battery in accordance with the present invention;
Figure 3 is a graph showing X-ray diffraction profiles of the respective negative electrodes of the batteries A18 and A20 fabricated in Examples;
Figure 4 is a photomicrograph taken using a scanning electron microscope (at a magnification of 1,000X), showing a section of the negative electrode of the battery A20 fabricated in Example;
Figure 5 is a photomicrograph taken using a scanning electron microscope (at a magnification of 5,000X), showing a section of the negative electrode of the battery A20 fabricated in Example;
Figure 6 is a graph showing X-ray diffraction profiles of the respective negative electrodes of the batteries C1 and C3 fabricated in Examples;

### BEST MODE FOR CARRYING OUT THE INVENTION

The present invention is below described in more detail by way of Examples. It will be recognized that the following examples merely illustrate the practice of the present invention but are not intended to be limiting thereof. Suitable changes and modifications can be effected without departing from the scope of the present invention.

### EXPERIMENT 1

### (Fabrication of Negative Electrode)

Copper powder in the form of flaky particles having a mean particle diameter of 10 µm, as the conductive metal powder, and silicon powder having a mean particle diameter of 50 µm as the active material particles were weighed such that a ratio by weight of the former to the latter was brought to 4:1 (= 1:0.25) and then dry mixed in a mortar. 90 parts by weight of the mixture was added to an 8 wt.% N-methylpyrrolidone solution containing 10 parts by weight of polyvinylidene fluoride as a binder to provide a negative electrode mix slurry.

The negative electrode mix slurry was coated on one surface of an electrolytic copper foil (15 µm thick) having a surface roughness Ra of 0.5 µm and serving as a current collector, dried and then rolled. A 20 mm diameter disc was cut out from the coated copper foil and then sintered by a heat treatment under argon atmosphere at 700 °C for 10 hours to provide a negative electrode. The thickness of the sintered electrode (excluding the current collector) was determined to be 50 µm.

### (Fabrication of Positive Electrode)

Starting materials, Li₂CO₃ and CoCO₃, were weighed such that a ratio of numbers of Li and Co atoms, Li:Co, was brought to 1:1, and then mixed in a mortar. The mixture was pressed in a 17 mm diameter mold and calcined in the air at 800 °C for 24 hours to obtain a calcined product consisting of LiCoO₂. This product was then ground into particles with a mean particle diameter of 20 µm.

90 parts by weight of the resulting LiCoO₂ powder and 5 parts by weight of artificial graphite as an electric conductor were added to a 5 wt.% N-methylpyrrolidone solution containing 5 parts by weight of polyvinylidene fluoride as a binder to provide a positive electrode mix slurry.

The positive electrode mix slurry was coated on an aluminum foil as a current collector, dried and then rolled. A 20 mm diameter disc was cut out from the coated aluminum foil to provide a positive electrode.

### (Preparation of Electrolyte Solution)

1 mole/liter of LiPF₆ was dissolved in a mixed solvent containing an equivolume of ethylene carbonate and diethyl carbonate to prepare an electrolyte solution.

### (Construction of Battery)

Using the above-prepared positive electrode, negative electrode and electrolyte solution, a flat-type rechargeable lithium battery A1 was constructed.

Figure 1 is a schematic sectional view of the constructed rechargeable lithium battery. The battery includes a positive electrode 1, a negative electrode 2, a separator 3, a positive can 4, a negative can 5, a positive current collector 6, a negative current collector 7 and an insulative gasket 8 made of polypropylene.

The positive electrode 1 and the negative electrode 2 were placed on opposite sides of the separator 3. These were housed in a battery case comprising the positive can 4 and the negative can 5. The positive current collector 6 connects the positive electrode 1 to the positive can 4 and the negative current collector 6 connects the negative electrode 2 to the negative can 5. Accordingly, a battery construction is provided which is capable of charge and discharge, i.e., rechargeable.

### EXPERIMENT 2

Silicon and nickel or copper were mixed such that a ratio in number of silicon to nickel or copper atoms was brought to 9:1, and then made into an Si₉Ni or Si₉Cu alloy by a single roll quenching process. These alloys were ground in a mortar into particles with a mean particle diameter of 50 µm. The procedure of Experiment 1 was followed, except that the silicon powder was replaced by these alloy powders, to construct batteries A2 and A3. The battery A2 was constructed using the SigNi alloy and the battery A3 using the Si₉Cu alloy.

### EXPERIMENT 3

An electroless plating process was utilized to provide nickel coating on surfaces of silicon powder particles having a mean particle diameter of 50 µm. By atomic absorption spectrometry (ICP), a weight of nickel coated on the silicon powder particles was found to be 0.5 % of a total weight.

The procedure of Experiment 1 was followed, except that the silicon powder was replaced by the nickel-coated silicon powder, to construct a battery A4.

### EXPERIMENT 4

An electrolytic process was utilized to deposit copper on a nickel foil and a stainless steel foil so that a copper coated nickel foil (15 µm thick) and a copper coated stainless steel foil (15 µm thick) were prepared. Each of these copper coated foils was determined to have a surface roughness Ra of 0.5 µm.

The procedure of Experiment 1 was followed, except that the electrolytic copper foil was replaced by the copper coated nickel or stainless steel foil, to construct batteries A5 and A6. The battery A5 resulted from the use of the copper coated nickel foil and the battery A6 from the use of the copper coated stainless steel foil.

The procedure of Experiment 1 was followed, except that the electrolytic copper foil was replaced by an electrolytic nickel or iron foil having a surface roughness Ra of 0.5 µm, to construct batteries A7 and A8. The battery A7 resulted from the use of the electrolytic nickel foil and the battery A8 from the use of the electrolytic iron foil.

### EXPERIMENT 5

The procedure of Experiment 1 was followed, except that the flaky copper powder was replaced by flaky nickel or iron powder having a mean particle diameter of 10 µm, to construct batteries A9 and A10. The battery A9 resulted from the use of the flaky nickel powder and the battery A10 from the use of the flaky iron powder.

The procedure of Experiment 1 was followed, except that the flaky copper powder was replaced by an equiweight mixture of the flaky copper powder used in Experiment 1 and flaky nickel powder having a mean particle diameter of 10 µm, to construct a battery All.

### EXPERIMENT 6

The procedure of Experiment 1 was followed, except that the electrolytic copper foil having a surface roughness Ra of 0.5 µm was replaced by an electrolytic copper foil having a surface roughness Ra of 0.2 µm, to construct a battery A12.

The procedure of Experiment 1 was followed, except that the electrolytic copper foil having a surface roughness Ra of 0.5 µm was replaced by a rolled copper foil having a surface roughness Ra of 0.1 µm, to construct a battery B1.

### (Evaluation of Charge-Discharge Cycle Characteristics)

The above-constructed batteries A1 - A12 and B1 were evaluated for charge-discharge cycle characteristics. Each battery was charged at 25 °C at a current of 1 mA to 4.2 V and then discharged at a current of 1 mA to 2.7 V. This was recorded as a unit cycle of charge and discharge. The battery was cycled to determine the number of cycles after which its discharge capacity fell down to 80 % of its first-cycle discharge capacity and the determined cycle number was recorded as a cycle life. The results are shown in Table 1. The cycle life of each battery is indicated therein by an index when that of the battery A1 is taken as 100.

**Table 1**

| Battery | Cycle Life |
|---|---|
| A1 (Surface Roughness Ra : 0.5 µm) | 100 |
| A2 (Surface Roughness Ra : 0.5 µm) | 110 |
| A3 (Surface Roughness Ra : 0.5 µm) | 115 |
| A4 (Surface Roughness Ra : 0.5 µm) | 112 |
| A5 (Surface Roughness Ra : 0.5 µm) | 97 |
| A6 (Surface Roughness Ra : 0.5 µm) | 94 |
| A7 (Surface Roughness Ra : 0.5 µm) | 96 |
| A8 (Surface Roughness Ra : 0.5 µm) | 97 |
| A9 (Surface Roughness Ra : 0.5 µm) | 95 |
| A10 (Surface Roughness Ra : 0.5 µm) | 93 |
| A11 (Surface Roughness Ra : 0.5 µm) | 97 |
| A12 (Surface Roughness Ra : 0.2 µm) | 85 |
| B1 (Surface Roughness Ra : 0.1 µm) | 65 |

As can be clearly seen from Table 1, the batteries A1 - A12 using metal foils having a surface roughness Ra of 0.2 µm or larger exhibit the extended cycle lives relative to the battery B1 using a metal foil having a surface roughness Ra of 0.1 µm. The use of a metal foil having a surface roughness Ra of 0.2 µm or larger is believed to have caused more effective sintering of the overlying active material particles and conductive metal powder and improved adhesion of the active material particles to the current collector.

### EXPERIMENT 7

In this Experiment, the effect of sintering on the cycle characteristics was studied.

Following Experiment 1, the negative electrode mix slurry was coated on an electrolytic copper foil, dried and rolled. However, in the fabrication of a negative electrode, the coated copper foil was not subjected to a heat treatment. Using this negative electrode, a battery B2 was constructed. This battery was evaluated for cycle characteristics in the same manner as above. Its cycle life was given by an index when that of the battery A1 was taken as 100. In Table 2, the cycle life of the battery A1 is also shown.

**Table 2**

| Battery | Cycle Life |
|---|---|
| A1 | 100 |
| B2 | 20 |

As apparent from Table 2, the battery A1 incorporating the negative electrode made with heat treatment exhibits far superior cycle characteristics compared to the battery B2 incorporating the negative electrode with heat treatment. This is believed to have resulted from the heat treatment which improved adhesion of the active material particles to the conductive metal powder and the conductive metal foil and induced metal components in the conductive metal foil and the conductive metal powder to diffuse into the active material particles to form therein a network of diffusion regions that improved the capability of current collection.

### EXPERIMENT 8

In this Experiment, the effect of the amount of the loaded conductive metal powder on the cycle characteristics was studied.

The procedure of Experiment 1 was followed, except that the weight of the flaky copper powder loaded per unit weight of the silicon powder was varied to 1 (50 % by weight of copper powder), 0.5 (33.3 % by weight of copper powder), 0.125 (11.1 % by weight of copper powder) and 0 (0 % by weight of copper powder), to construct batteries A13, A14, A15 and A16.

These batteries were evaluated for cycle characteristics in the same manner as described above. The results are given in Table 3. The cycle life of each battery is indicated by an index when that of the battery A1 is taken as 100.

**Table 3**

| Battery | Cycle Life |
|---|---|
| A1 (Copper Powder Content : 20 Weight %) | 100 |
| A13 (Copper Powder Content : 50 Weight %) | 143 |
| A14 (Copper Powder Content : 33.3 Weight %) | 127 |
| A15 (Copper Powder Content : 11.1 Weight %) | 91 |
| A16 (Copper Powder Content : 0 Weight %) | 29 |

As can be clearly seen from Table 3, the batteries A1 and A13 - A15 with the negative electrodes containing the flaky copper powder exhibit far superior cycle characteristics compared to the battery A16 with the negative electrode excluding the flaky copper powder. This is believed to have resulted from the addition of the copper powder that improved adhesion between the silicon powder particles as the active material particles, led to the formation of a solid conductive network surrounding the silicon powder particles, and as a result, improved the capability of current collection.

### EXPERIMENT 9

In this Experiment, the effects of the heat treatment temperature, mean particle diameter of the silicon powder and mean particle diameter of the conductive metal powder on the cycle life were studied.

The procedure of Experiment 1 was followed, except that the heat treatment temperature, mean particle diameter of the silicon powder, and mean particle diameter and type of the conductive metal powder were altered as specified in Table 4, to construct batteries A17 - A24. These batteries were evaluated for cycle characteristics according to the procedure used in Experiment 1. The cycle life of each battery was indicated by an index when that of the battery A1 was taken as 100.

**Table 4**

| Battery | Heat Treatment Conditions | Mean Particle Diameter of Silicon Powder (µm) | Mean Particle Diameter of Conductive Metal Powder (µm) | Cycle Life |
|---|---|---|---|---|
| A1 | 700 °C, 10 Hours | 50 | 15 Flaky Copper Powder | 100 |
| A17 | 400 °C, 30 Hours | 50 | 15 Flaky Copper Powder | 130 |
| A18 | 700 °C, 10 Hours | 3 | 15 Flaky Copper Powder | 330 |
| A19 | 500 °C, 10 Hours | 3 | 15 Flaky Copper Powder | 360 |
| A20 | 400 °C, 30 Hours | 3 | 15 Flaky Copper Powder | 750 |
| A21 | 400 °C, 10 Hours | 3 | 15 Flaky Copper Powder | 733 |
| A22 | 300 °C, 30 Hours | 3 | 15 Flaky Copper Powder | 740 |
| A23 | 200 °C, 20 Hours | 3 | 15 Flaky Copper Powder | 305 |
| A24 | 400 °C, 30 Hours | 3 | 3 Flaky Brass (Cu-10wt%Zn) Powder | 800 |

As can be clearly seen from Table 4, maintaining the heat treatment temperature within the range of 200 °C - 500 °C results in the marked improvement of cycle characteristics. The particularly preferred heat treatment temperature is found to be about 400 °C. As apparent from the comparison between the batteries A1 and A18 and between the batteries A17 and A20, the cycle characteristics is markedly improved when the mean particle diameter of the silicon powder is reduced to 3 µm from 50 µm.

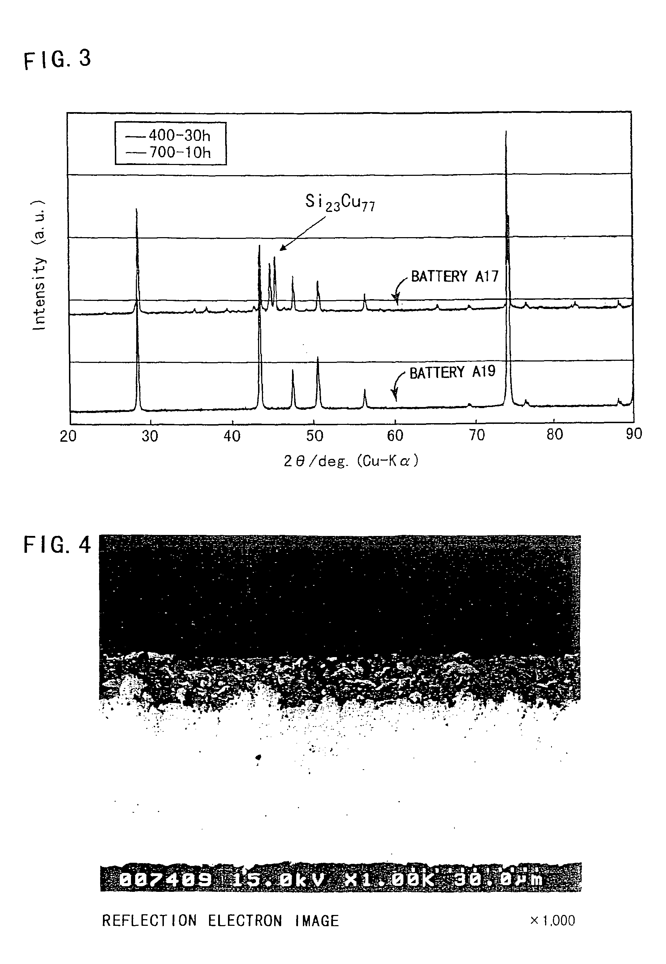

Figure 3 is a graph showing X-ray diffraction profiles of the respective negative electrodes of the batteries A18 and A20. As apparent from Figure 3, the electrode made via heat treatment at 700 °C for the battery A18 exhibits a copper silicide peak, while no copper silicide peak existed for the electrode made via heat treatment at 400 °C for the battery A20. This appears to demonstrate that the heat treatment at 700 °C induces diffusion of excess copper element into the silicon powder to result in the deposition of copper silicide. This accordingly suggests that sintering is preferably carried out under such heat treatment conditions that cause no deposition of copper silicide in order to improve cycle characteristics.

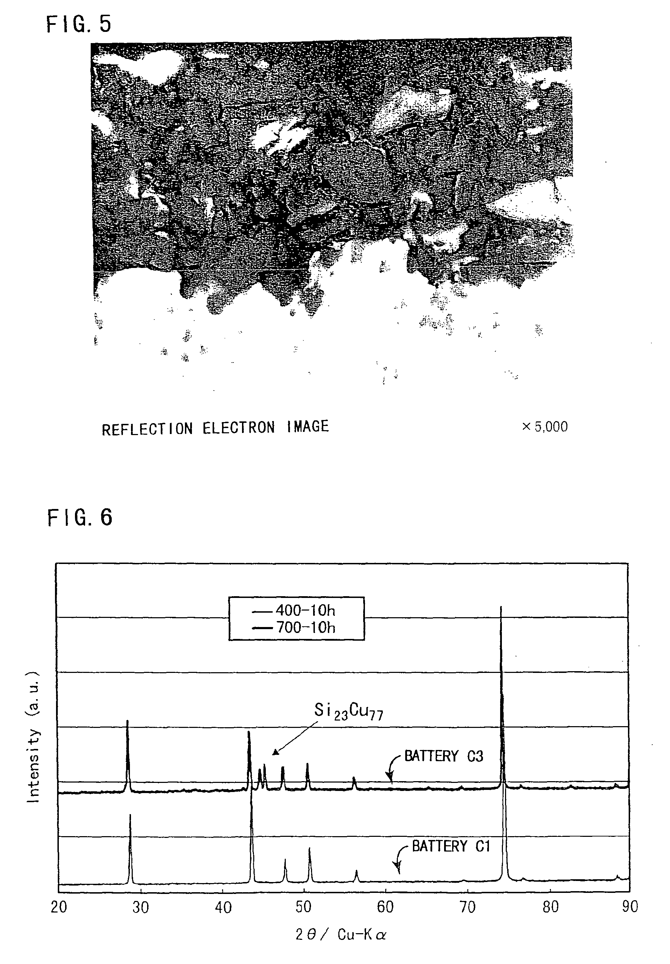

Figures 4 and 5 are photomicrographs taken using a scanning electron microscope (SEM), each showing a section of the negative electrode incorporated in the battery A20. Figure 4 is a photomicrograph taken at a magnification of 1,000X and Figure 5 is a photomicrograph taken at a magnification of 5,000X. These negative electrodes were resin-embedded and then sliced before they were used as samples for observation.

As can be clearly seen from Figures 4 and 5, the silicon powder and the conductive powder while both in a closely packed condition are brought into contact with a surface of the electrolytic copper foil.

It is also observed that the silicon powder and the binder penetrate densely into pits on the surface of the electrolytic copper foil.

Polyvinylidene fluoride (PVdF) for use as the binder was subjected to a heat treatment at 400 °C and 700 °C and then to observation by infrared absorption spectrum (IR spectrum). Peaks for PVdF and its decomposition product appeared in the IR spectrum of PVdF when heat treated at 400 °C. However, the PVdF peak disappeared completely in the IR spectrum of PVdF when heat treated at 700 °C. Accordingly, the improved cycle characteristics obtained for the battery incorporating the negative electrode made via heat treatment at 400 °C is conceivably attributed not only to the sintering that improved adhesion between the silicon powder particles and between the silicon powder particles and the copper foil, but also to the action of a binding force of the remaining binder that further improved adhesion between the silicon powder particles and between the silicon powder particles and the copper foil.

### EXPERIMENT 10

In this Experiment, the effect of the binder type on the cycle life was studied.

The procedure of Experiment 1 was followed, except that polyvinylpyrrolidone (PVP) was used as the binder, the silicon powder was used having a mean particle diameter of 3 µm and the heat treatment was carried out at 400 °C for 10 hours, to construct a battery A25. This battery was evaluated for cycle characteristics according to the procedure used in Experiment 1. The results are given in Table 5. In Table 5, the results for the batteries A1 and A21 are also given. The cycle life of each battery is indicated by an index when that of the battery A1 is taken as 100.

**Table 5**

| Battery | Binder | Heat Treatment Conditions | Mean Particle Diameter of Silicon Powder (µm) | Cycle Life |
|---|---|---|---|---|
| A1 | PVdF | 700 °C, 10 Hours | 50 | 100 |
| A21 | PVdF | 400 °C, 10 Hours | 3 | 733 |
| A25 | PVP | 400 °C, 10 Hours | 3 | 50 |

As can be clearly seen from Table 5, the use of fluoro-containing PVdF as the binder results in the improved cycle characteristics.

In this Experiment, the presence of a fluoride of silicon on particle surfaces of the silicon powder as the active material was confirmed by electron spectroscopic analysis (XPS) for the negative electrode of the battery A21 which incorporated PVdF as the binder and experienced a heat treatment at 400 °C.

### EXPERIMENT 11

In this Experiment, the effect of the type of the conductive metal powder on the cycle life was studied.

The procedure of Experiment 1 was followed, except that the silicon powder was used having a mean particle diameter of 3 µm, the conductive metal powder specified in Table 6 was used and the heat treatment was carried out at 400 °C for 30 hours, to construct batteries A26 - A32. A battery B3 was also constructed using ketchen black in the place of the conductive metal powder. These batteries were evaluated for cycle characteristics according to the procedure used in Experiment 1. The results are given in Table 6. The cycle life of each battery is indicated by an index when that of the battery A1 is taken as 100. In Table 6, the results for the batteries A19 and A24 are also given.

**Table 6**

| Battery | Conductive Metal Powder (Mean Particle Diameter µm) | Cycle Life |
|---|---|---|
| A19 | Flaky Cu Powder (15) | 750 |
| A24 | Flaky Brass(Cu-10wt%Zn) Powder (3) | 800 |
| A26 | Co Powder (5) | 810 |
| A27 | Fe Powder (3) | 820 |
| A28 | Mo Powder (0.7) | 770 |
| A29 | Flaky Ni Powder (13) | 820 |
| A30 | Ti Powder (10) | 820 |
| A31 | W Powder (0.6) | 780 |
| A32 | Zn Powder (7) | 720 |
| B3 | Ketchen Black (0.3) | 280 |

As can be clearly seen from Table 6, the electrode using any type of the conductive metal powder exhibits excellent cycle characteristics. This is probably because the conductive metal powder forms a conductive network surrounding the silicon powder particles to result in obtaining the increased current collecting capability. However, the use of ketchen black in the place of the conductive metal powder apparently shortens a cycle life. This is believed likely due to the low density and high bulk of the ketchen black which made it insufficient for the binder present in the same amount as in the other electrodes to provide adhesion between the particles.

### EXPERIMENT 12

In this Experiment, the effect of rolling in the electrode fabrication step on the cycle life was studied.

The procedure of Experiment 1 was followed, except that coating of the negative electrode mix slurry on the electrolytic copper foil surface was not followed by rolling, to construct a battery A33. This battery was evaluated for cycle characteristics according to the procedure used in Experiment 1. The evaluation results are given in Table 7. The cycle life of each battery is indicated by an index when that of the battery A1 is taken as 100.

**Table 7**

| Battery | Rolling | Cycle Life |
|---|---|---|
| A1 | Present | 100 |
| A33 | Absent | 50 |

As can be clearly seen from Figure 7, the practice of rolling in the electrode fabrication step improves cycle characteristics. This is probably because the practice of rolling has led not only to further dense packing of the active material particles that improves contact therebetween but also to the increased contact area between the active material particles, the conductive metal powder and the current collector that enables more effective sintering, resulting in the improved current collecting performance characteristics.

### EXPERIMENT 13

In the fabrication of electrodes, the flaky copper powder as the conductive metal powder was excluded and only the silicon powder was used. Specifically, the copper foils specified in Table 8, the silicon powders having the mean particle diameters specified in Table 8 and the heat treatment conditions specified in Table 8 were used. Otherwise, the procedure of Experiment 1 was followed to construct batteries C1 - C3 and B4. These batteries were evaluated for cycle characteristics according to the procedure used in Experiment 1. The results are given in Table 8. The cycle life of each battery is indicated by an index when that of the battery A1 is taken as 100.

**Table 8**

| Battery | Copper Foil | Heat Treatment Conditions | Mean Particle Diameter of Silicon Powder (µm) | Cycle Life |
|---|---|---|---|---|
| A1 | Electrolytic Copper Foil (Surface Roughness Ra : 0.5 µm) | 700 °C, 10 Hours | 50 | 100 |
| C1 | Electrolytic Copper Foil (Surface Roughness Ra : 0.5 µm) | 400 °C, 10 Hours | 3 | 720 |
| C2 | Electrolytic Copper Foil (Surface Roughness Ra : 0.5 µm) | 400 °C, 10 Hours | 50 | 125 |
| C3 | Electrolytic Copper Foil (Surface Roughness Ra : 0.5 µm) | 700 °C, 10 Hours | 3 | 200 |
| B4 | Rolled Copper Foil (Surface Roughness Ra : 0.1 µm) | 400 °C, 10 Hours | 3 | 95 |

As can be clearly seen from Figure 8, the use of the electrode incorporating the silicon powder with a smaller mean particle diameter and made via heat treatment at 400 °C results in the marked improvement of cycle characteristics. This is likely because the use of the silicon powder having a smaller mean particle diameter has led to the effective sintering that improves adhesion between the silicon powder particles and between the silicon powder particles and the copper foil.

As also apparent from comparison between the batteries C1 and B4, the use of the metal foil having a surface roughness Ra of 0.2 µm or larger results in the improved cycle performance characteristics.

Figure 6 is a graph showing X-ray diffraction profiles of the respective negative electrodes of the batteries C1 and C3. As apparent from Figure 6, the electrode made via heat treatment at 700 °C for the battery C3 exhibits a copper silicide peak, while no copper silicide peak existed for the electrode made via heat treatment at 400 °C for the battery C1. This demonstrates that even in the case where the conductive metal powder was excluded and only the silicon powder was used in the fabrication of electrodes, sintering is preferably carried out at such a heat treatment temperature that no deposition of copper silicide is caused to occur in a detectable level by X-ray diffractometry.

### EXPERIMENT 14

The effect of the type of the binder in the electrode made by incorporating the silicon powder but excluding the flaky copper powder as the conductive metal powder on the cycle life was studied. In Experiment 1, the silicon powder having a mean particle diameter of 3 µm was used, the flaky copper powder was excluded, and the heat treatment condition and the binder respectively specified in Table 9 were used. Otherwise, the procedure of Experiment 1 was followed to construct batteries D1 - D5. Where polyimide was used as the binder, an electrode was fabricated by adding 90 parts by weight of silicon powder to an 18 wt.% N-methylpyrrolidone solution containing 10 parts by weight of polyamic acid to provide a negative electrode mix slurry, coating and heat treating the negative electrode mix slurry. The electrode, subsequent to the heat treatment at 400 °C, was found to have an imidization level of 100 %. Where styrene-butadiene rubber (SBR) or polytetrafluoroethylene (PTFE) was used as the binder, an electrode was fabricated by adding 90 parts by weight of silicon powder to a mixture of a 3 wt.% aqueous solution containing 1 part by weight of a carboxymethylcellulose (CMC) thickener with a 48 wt.% aqueous dispersion containing 10 parts by weight of styrene-butadiene rubber (SBR) or with a 60 wt.% aqueous dispersion containing 10 parts by weight of polytetrafluoroethylene (PTFE) to provide a negative electrode mix slurry. Where polyvinylpyrrolidone (PVP) was used as the binder, an electrode was fabricated by adding 90 parts by weight of silicon powder to a 8 wt.% N-methylpyrrolidone solution containing 10 parts by weight of polyvinylpyrrolidone (PVP) to provide a negative electrode mix slurry.

The batteries D1 - D5 were fabricated using these electrodes according to the procedure used in Experiment 1 and then evaluated for cycle characteristics. The results are given in Table 9. The cycle life of each battery is indicated by an index when that of the battery A1 is taken as 100.

The temperature at which the weight of the binder showed a declining tendency in thermogravimetry was recorded as a thermal decomposition initiation temperature of the binder.

**Table 9**

| Battery | Binder | Decomposition Initiating Temp. of Binder (°C) | Heat Treatment Conditions | Cycle Life |
|---|---|---|---|---|
| A1 | Polyvinylidene Fluoride (PVdF) | 380 | 700 °C, 10 Hours | 100 |
| D1 | Polyvinylidene Fluoride (PVdF) | 380 | 400 °C, 30 Hours | 820 |
| D2 | Polyimide (PI) | 500 | 400 °C, 30 Hours | 980 |
| D3 | Polyvinyl-pyrrolidone (PVP) | 260 | 400 °C, 10 Hours | 55 |
| D4 | Polytetrafluoro-ethylene (PTFE) | 450 | 400 °C, 30 Hours | 710 |
| D5 | Styrene-Butadiene Rubber (SBR) | 240 | 400 °C, 10 Hours | 40 |

As can be seen from Figure 9, the use of the binder having a higher decomposition initiation temperature results in the improved cycle characteristics. This is believed likely due to the binder left undecomposed after the heat treatment, which served during sintering to improve adhesion between the active material and the current collector and between the active material particles, exhibited a binding force that further improved adhesion therebetween and, as a result, provided a further adherent electrode.

### EXPERIMENT 15

The effect of the mean particle diameter of the silicon powder in the electrode made by incorporating the silicon powder but excluding the flaky copper powder as the conductive metal powder on the cycle life was studied. The case of using polyimide as the binder in Experiment 14 was followed, except that the mean particle diameter of the silicon powder was varied as specified in Table 10, to construct batteries D6 - D10. These batteries were evaluated for cycle characteristics according to the procedure used in Experiment 1. The results are given in Table 10. The cycle life of each battery is indicated by an index when that of the battery A1 is taken as 100. In Table 10, the results for the batteries A1 and C2 are also shown.

**Table 10**

| Battery | Mean Particle Diameter of Silicon Powder (µm) | Heat Treatment Conditions | Binder | Cycle Life |
|---|---|---|---|---|
| A1 | 50 | 700 °C, 10 Hours | PVdF | 100 |
| C2 | 50 | 400 °C, 10 Hours | PVdF | 125 |
| D6 | 0.3 | 400 °C, 30 Hours | PI | 250 |
| D2 | 3 | 400 °C, 30 Hours | PI | 980 |
| D7 | 4 | 400 °C, 30 Hours | PI | 710 |
| D8 | 5 | 400 °C, 30 Hours | PI | 450 |
| D9 | 7.5 | 400 °C, 30 Hours | PI | 460 |
| D10 | 50 | 400 °C, 30 Hours | PI | 120 |

As can be clearly seen from Table 10, the use of the silicon powder having a mean particle diameter of 10 µm or below results in the improved cycle performance characteristics.

### EXPERIMENT 16

In this Experiment, the effect of the amount of the binder in the electrode made by incorporating the silicon powder but excluding the flaky copper powder as the conductive metal powder on the cycle characteristics was studied. The silicon powder having a mean particle diameter of 3 µm was used but the flaky copper powder was excluded. The heat treatment and the binder used are specified in Table 11, respectively. Otherwise, the procedure of Experiment 1 was followed to construct batteries D11 - D16. Where polyimide was used as the binder, a battery was fabricated by following the case of using polyimide as the binder in Experiment 14. These batteries were evaluated for cycle characteristics according to the procedure used in Experiment 1. The results are given in Table 11. The cycle life of each battery is indicated by an index when that of the battery A1 is taken as 100. In Table 11, the results for the batteries A1, D1 and D2 are also shown.

**Table 11**

| Battery | Binder | Binder Content (Weight %) | Heat Treatment Conditions | Cycle Life |
|---|---|---|---|---|
| A1 | PVdF | 10 | 700 °C, 10 Hours | 100 |
| D11 | PVdF | 3.2 | 400 °C, 30 Hours | 520 |
| D1 | PVdF | 10 | 400 °C, 30 Hours | 820 |
| D12 | PVdF | 18 | 400 °C, 30 Hours | 830 |
| D13 | PVdF | 25 | 400 °C, 30 Hours | 810 |
| D14 | PI | 1.1 | 400 °C, 30 Hours | 200 |
| D15 | PI | 5.3 | 400 °C, 30 Hours | 480 |
| D2 | PI | 10 | 400 °C, 30 Hours | 980 |
| D16 | PI | 18 | 400 °C, 30 Hours | 970 |

As apparent from Table 11, the electrode if containing the binder in the amount of at least 5.3 % by weight, preferably at least 10 % by weight, provides the improved battery cycle characteristics. This is believed due to the presence of the binder in the amount sufficient to maintain good adhesion between the active material particles and the current collector and between the active material particles.

The following examples illustrate the sixth and seventh aspects of the present invention.

### EXPERIMENT 17

### (Fabrication of Negative Electrode)

Copper powder in the form of flaky particles having a mean particle diameter of 10 µm, as the conductive metal powder, and silicon powder having a mean particle diameter of 50 µm as the active material particles were weighed such that a ratio by weight of the former to the latter was brought to 4:1 (= 1:0.25) and then dry mixed in a mortar. 90 parts by weight of the mixture was added to an 8 wt.% N-methylpyrrolidone solution containing 10 parts by weight of polyvinylidene fluoride as a binder to provide a negative electrode mix slurry.

The negative electrode mix slurry was coated on one surface of an electrolytic copper foil (15 µm thick) having a surface roughness Ra of 0.5 µm and serving as a current collector, dried and then rolled. A 20 mm diameter disc was cut out from the resulting coated copper foil and then sintered by a heat treatment under hydrogen atmosphere at 600 °C for 10 hours to provide a negative electrode. The thickness of the sintered electrode (excluding the current collector) was determined to be 50 µm.

### (Fabrication of Positive Electrode)

Starting materials, Li₂CO₃ and CoCO₃, were weighed such that a ratio of numbers of Li and Co atoms, Li:Co, was brought to 1:1, and then mixed in a mortar. The mixture was pressed in a 17 mm diameter mold and calcined in the air at 800 °C for 24 hours to obtain a calcined product consisting of LiCoO₂. This product was then ground into particles with a mean particle diameter of 20 µm.

90 parts by weight of the resulting LiCoO₂ powder and 5 parts by weight of artificial graphite powder as an electric conductor were added to a 5 wt.% N-methylpyrrolidone solution containing 5 parts by weight of polyvinylidene fluoride as a binder to provide a positive electrode mix slurry.

The positive electrode mix slurry was coated on an aluminum foil as a current collector, dried and then rolled. A 20 mm diameter disc was cut out from the coated aluminum foil to provide a positive electrode.

### (Preparation of Electrolyte Solution)

1 mole/liter of LiPF₆ was dissolved in a mixed solvent containing an equivolume of ethylene carbonate and diethyl carbonate to prepare an electrolyte solution.

### (Construction of Battery)

Using the above-prepared positive electrode, negative electrode and electrolyte solution, a flat-type rechargeable lithium battery E1 shown in Figure 1 was constructed.

### EXPERIMENT 18

Silicon and nickel or copper were mixed such that a ratio in number of silicon to nickel or copper atoms was brought to 9:1, and then made into an Si₉Ni or Si₉Cu alloy by a single roll quenching process. These alloys were ground in a mortar into particles with a mean particle diameter of 50 µm. The procedure of Experiment 17 was followed, except that the silicon powder was replaced by these alloy powders, to construct batteries E2 and E3. The battery E2 was constructed using the Si₉Ni alloy and the battery E3 using the Si₉Cu alloy.

### EXPERIMENT 19

An electroless plating process was utilized to provide nickel coating on surfaces of silicon powder particles having a mean particle diameter of 50 µm. By atomic absorption spectrometry (ICP), a weight of nickel coated on the silicon powder was found to be 0.5 % of a total weight.

The procedure of Experiment 17 was followed, except that the silicon powder was replaced by the nickel-coated silicon powder, to construct a battery E4.

### EXPERIMENT 20

An electrolytic process was utilized to deposit copper on a nickel foil and a stainless steel foil so that a copper coated nickel foil (15 µm thick) and a copper coated stainless steel foil (15 µm thick) were prepared. Each of these copper coated foils was determined to have a surface roughness Ra of 0.5 µm.

The procedure of Experiment 17 was followed, except that the electrolytic copper foil was replaced by the copper coated nickel or stainless steel foil, to construct batteries E5 and E6. The battery E5 resulted from the use of the copper coated nickel foil and the battery E6 from the use of the copper coated stainless steel foil.

The procedure of Experiment 17 was followed, except that the electrolytic copper foil was replaced by an electrolytic nickel foil having a surface roughness Ra of 0.5 µm, to construct a battery E7.

### EXPERIMENT 21

The procedure of Experiment 17 was followed, except that the flaky copper powder was replaced by flaky nickel or iron powder having a mean particle diameter of 10 µm, to construct batteries E8 and E9. The battery E8 resulted from the use of the flaky nickel powder and the battery E9 from the use of the flaky iron powder.

The procedure of Experiment 17 was followed, except that the flaky copper powder was replaced by an equiweight mixture of the flaky copper powder used in Experiment 17 and flaky nickel powder having a mean particle diameter of 10 µm, to construct a battery E10.

### EXPERIMENT 22

The procedure of Experiment 17 was followed, except that the heat treatment for sintering was carried out under argon atmosphere at 600 °C for 10 hours, to fabricate a negative electrode and then a battery F1. Also following the procedure 17, the negative electrode mix slurry was coated on an electrolytic copper foil, dried and rolled. However, in the fabrication of a negative electrode, the coated copper foil was not subjected to a heat treatment. Using this negative electrode, a battery F2 was constructed in the same manner as in Experiment 17.

### (Evaluation of Charge-Discharge Cycle Characteristics)

The above-constructed batteries E1 - E10 and F1 - F2 were evaluated for charge-discharge cycle characteristics. Each battery was charged at 25 °C at a current of 1 mA to 4.2 V and then discharged at a current of 1 mA to 2.7 V. This was recorded as a unit cycle of charge and discharge. The battery was cycled to determine the number of cycles after which its discharge capacity fell down to 80 % of its first-cycle discharge capacity and the determined cycle number was recorded as a cycle life. The results are shown in Table 12. The cycle life of each battery is indicated therein by an index when that of the battery E1 is taken as 100.

**Table 12**

| Battery | Cycle Life |
|---|---|
| E1 (Under Hydrogen Atmosphere) | 100 |
| E2 (Under Hydrogen Atmosphere) | 113 |
| E3 (Under Hydrogen Atmosphere) | 120 |
| E4 (Under Hydrogen Atmosphere) | 112 |
| E5 (Under Hydrogen Atmosphere) | 99 |
| E6 (Under Hydrogen Atmosphere) | 97 |
| E7 (Under Hydrogen Atmosphere) | 99 |
| E8 (Under Hydrogen Atmosphere) | 96 |
| E9 (Under Hydrogen Atmosphere) | 92 |
| E10 (Under Hydrogen Atmosphere) | 97 |
| F1 (Under Argon Atmosphere) | 75 |
| F2 (Without Heat Treatment) | 15 |

As apparent from Table 12, the battery E1 with the negative electrode made via the heat treatment under hydrogen atmosphere shows the improved cycle characteristics compared to the battery F1 with the negative electrode made via the heat treatment under argon atmosphere and the battery F2 with the negative electrode made without the heat treatment. This is probably because the heat treatment under hydrogen atmosphere has improved adhesion between the copper foil, active material and copper powder and as a result improved current collecting capability.

### EXPERIMENT 23

The effect of the surface roughness Ra of the current collector on the cycle characteristic was studied in this Experiment.

The procedure of Experiment 17 was followed, except that the electrolytic copper foil with a surface roughness Ra of 0.5 µm was replaced by an electrolytic copper foil having a surface roughness Ra of 0.2 µm or a rolled copper foil having a surface roughness Ra of 0.1 µm, to construct batteries E11 and E12. These batteries were evaluated for cycle characteristics in the same manner as described above. The cycle life of each battery is indicated by an index when that of the battery E1 is taken as 100. In Table 13, the cycle life of the battery E1 is also shown.

**Table 13**

| Battery | Cycle Life |
|---|---|
| E1 (Surface Roughness Ra : 0.5 µm) | 100 |
| E11 (Surface Roughness Ra : 0.2 µm) | 83 |
| E12 (Surface Roughness Ra : 0.1 µm) | 62 |

As can be clearly seen from Table 13, the batteries E1 and E11 with the negative electrode using the copper foil having a surface roughness Ra of 0.2 µm or larger exhibit the longer cycle lives compared to the battery E12 with the negative electrode using the copper foil having the smaller surface roughness Ra. These are believed to suggest that the use of a metal foil having a larger surface roughness Ra as a current collector results in the more effective sintering between the metal foil, active material and copper powder that improves adhesion therebetween.

### EXPERIMENT 24

In this Experiment, the effect of the loadings of the conductive metal powder on the cycle characteristics was studied.

The procedure of Experiment 17 was followed, except that the weight of the flaky copper powder loaded per unit weight of the silicon powder was varied to 1 (50 % by weight of copper powder), 0.5 (33.3 % by weight of copper powder) and 0.125 (11.1 % by weight of copper powder), to construct batteries E13, E14 and E15. For a comparative purpose, the procedure of Experiment 17 was followed, except that the flaky copper powder was excluded and only the silicon powder was used, to construct a battery F3.

These batteries were evaluated for cycle characteristics in the same manner as described above. The results are given in Table 14. The cycle life of each battery is indicated by an index when that of the battery E1 is taken as 100.

**Table 14**

| Battery | Cycle Life |
|---|---|
| E1 (Copper Powder Content : 20 Weight %) | 100 |
| E13 (Copper Powder Content : 50 Weight %) | 145 |
| E14 (Copper Powder Content : 30.3 Weight %) | 124 |
| E15 (Copper Powder Content : 11.1 Weight %) | 90 |
| F3 (Copper Powder Content : 0 Weight %) | 31 |

As can be clearly seen from Table 14, the batteries E1 and E13 - E15 with the negative electrodes containing the flaky copper powder exhibit far superior cycle characteristics compared to the battery F3 with the negative electrode excluding the flaky copper powder. This is believed to have resulted from the addition of the copper powder that improved adhesion between the silicon powder particles as the active material particles, led to the formation of a solid conductive network surrounding the silicon powder particles and as a result improved the capability of current collection.

### UTILITY IN INDUSTRY

In accordance with the present invention, a negative electrode for a rechargeable lithium battery, as well as a rechargeable lithium battery, can be provided which exhibits a high discharge capacity and excellent cycle characteristics.

## Claims

1. An electrode for a rechargeable lithium battery, **characterized in that** a layer of active material particles composed of a material which alloys with lithium is provided on a current collector, said active material particles in the layer are sinter bonded to each other, a component which does not alloy with lithium is diffused into the active material particles, and said layer of active material particles includes a binder which remains after a heat treatment for the sintering.

2. The electrode for a rechargeable lithium battery as recited in claim 1, **characterized in that** said nonlithium-alloying component is diffused from said current collector.

3. The electrode for a rechargeable lithium battery as recited in claim 1 or 2, **characterized in that** said layer of active material particles further includes conductive powder composed of a material which does not alloy with lithium.

4. The electrode for a rechargeable lithium battery as recited in any one of claims 1 - 3, **characterized in that** said nonlithium-alloying component is diffused from said conductive powder.

5. The electrode for a rechargeable lithium battery as recited in any one of claims 1 - 4, **characterized in that** a detectable level of an intermetallic compound between said lithium-alloying component and said nonlithium-alloying component does not exist in regions of said active material particles where the nonlithium-alloying component is diffused, when analyzed by X-ray diffractometry.

6. The electrode for a rechargeable lithium battery as recited in any one of claims 1 - 5, **characterized in that** said binder is polyimide.

7. The electrode for a rechargeable lithium battery as recited in claim 6, **characterized in that** said polyimide is a condensate obtained by subjecting polyamic acid to a heat treatment.

8. The electrode for a rechargeable lithium battery as recited in claim 1 - 5, **characterized in that** said binder is a fluoro-containing binder remaining after the heat treatment.

9. The electrode for a rechargeable lithium battery as recited in claim 8, **characterized in that** said binder is polyvinylidene fluoride or polytetrafluoroethylene remaining after the heat treatment.

10. The electrode for a rechargeable lithium battery as recited in any one of claims 1 - 9, **characterized in that** said active material particles and/or said binder penetrates into pits on said surface of the conductive metal foil.

11. The electrode for a rechargeable lithium battery as recited in any one of claims 1 - 10, **characterized in that** said active material particles have a mean particle diameter of up to 10 µm.

12. The electrode for a rechargeable lithium battery as recited in any one of claims 1 - 11, **characterized in that** said active material particles contains silicon and/or a silicon alloy as said material that alloys with lithium.

13. The electrode for a rechargeable lithium battery as recited in claim 12, **characterized in that** said active material particles are composed of silicon.

14. The electrode for a rechargeable lithium battery as recited in any one of claims 1 - 13, **characterized in that** said component diffused into the active material particles is a copper element.

15. The electrode for a rechargeable lithium battery as recited in any one of claims 1 - 14, **characterized in that** said current collector comprises a copper foil, a copper alloy foil, a metal foil having a copper surface layer, or a metal foil having a copper alloy surface layer.

16. The electrode for a rechargeable lithium battery as recited in any one of claims 1 - 15, **characterized in that** said current collector comprises an electrolytic copper foil, an electrolytic copper alloy foil, a metal foil having an electrolytic copper surface, or a metal foil having an electrolytic copper alloy surface.

17. The electrode for a rechargeable lithium battery as recited in any one of claims 1 - 16, **characterized in that** said current collector has a surface roughness Ra of 0.2 µm or larger.

18. The electrode for a rechargeable lithium battery as recited in any one of claims 3 - 17, **characterized in that** said conductive powder contains copper and/or a copper alloy.

19. The electrode for a rechargeable lithium battery as recited in any one of claims 1 - 18, **characterized in that** said active material particles contain silicon and/or a silicon alloy, said component diffused into the active material particles is a copper element, and a detectable level of copper silicide does not exist in regions of said electrode where said copper element is diffused, when analyzed by X-ray diffractometry.

20. A rechargeable lithium battery **characterized** as comprising a negative electrode comprising the electrode as recited in any one of claims 1 - 19, a positive electrode containing positive active material and a nonaqueous electrolyte.
